# EUROPEAN PATENT APPLICATION

(11) **EP 2 187 582 A1**
(43) Date of publication of application: **19.05.2010**
(21) Application number: 09252580.7
(22) Date of filing: 10.11.2009
(51) Int. Cl.: H04L 12/56

(54) **Transmission apparatus, transmission network, and method being employed thereof**

(30) Priority: 12.11.2008 JP 2008289326; 30.10.2009 JP 2009250155
(71) Applicant: Nec Corporation, Tokyo 108-8001 (JP)
(72) Inventor: Tanuma, Hiroyuki, Tokyo 108-8001 (JP)
(74) Representative: Robson, Aidan John

(57) **Abstract**

A transmission apparatus searches a new protection path at the time point that a failure has occurred in a working path and the working path has been switched to a protection path, registers the searched protection path, and secures the working path and the protection path of which a ratio is one versus one at any time. The transmission apparatus includes a holding means for holding an initially-set working path and protection path, and a means for, based upon a content of the holding of the foregoing holding means, making a changeover to the above working path after the initially-set working path recovers from the failure.

## Description

### INCORPORATION BY REFERENCE

This application is based upon and claims the benefit of priority from Japanese patent application No. 2008-289326, filed on November 12, 2008, the disclosure of which is incorporated herein in its entirety by reference.

### RELATED ART

The present invention relates to a transmission apparatus, a transmission network, and a method of switching a path being employed therefor, and more particular to a method of switching a path at the time of multiple failures in a transmission network.

In the method of switching the path of the transmission network, which relates to the present invention, a switching destination of the path is fixed with the case of the technique of previously setting a switching destination of the path. Further, while the switching destination of the path can be searched so long as there exist resources of the network with the case of the technique of dynamically switching the path, a switching speed of the path is slow as compared with the speed in the case of a path pre-setting & switching means in which the switching destination has been fixed. Further, with the case of the technique of dynamically switching the path, a changeover to the initially-set path cannot be made after the path recovers from the failure.

For example, Patent document 1 (JP-P2005-012306A) discloses that a new protection path is searched at a time point that a failure occurs in a working path and the working path is switched to a protection path.

When the path switching method relating to the present invention is a method of switching the path with distribution processing, the technique of previously setting the switching destination of the path makes it possible to switch the path at a high speed by previously setting the path. However, the technique of previously setting the switching destination of the path causes a problem that the switching destination of the path is previously fixed.

Further, when the path switching method relating to the present invention is a method of dynamically switching the path, the switching destination of the path can be searched so long as the resources of the network exist. However, the technique of dynamically switching the path causes a problem that the switching speed of the path becomes slow as compared with the speed in the case of the switching technique in which the path is previously set.

In addition, with the technique disclosed in the above-mentioned patent document 1, the switching destination of the path is not fixed, and yet the path can be switched at a high speed because searching the new protection path at a time point that the current path is switched to the protection path makes it possible to previously set the path. The technique disclosed in the above-mentioned patent document 1, however, causes a problem that it becomes unclear whether a changeover to the initially-set working path can be made when the working path recovers from the failure.

### SUMMARY OF THE INVENTION

An object of the present invention lies in a point of providing a transmission apparatus and a transmission network that solve the above-mentioned points at issue, and, when the initially-set working path or protection path has recovered from the failure, make it possible to switch the path secured currently as the working path or the protection path to the foregoing initially-set working path or protection path that has recovered from the failure, and a method of switching the path being employed therefor.

The present invention, which is a transmission apparatus being employed for a transmission network for searching a new protection path at the time point that a failure has occurred in a working path and the working path has been switched to a protection path, registering the searched protection path, and securing the working path and the protection path of which a ratio is one versus one at any time, is characterized in including: a holding unit for holding an initially-set working path and protection path; and a path switching unit for, when the foregoing initially-set working path or protection path has recovered from the failure, switching the path secured currently as the working path or the protection path to the foregoing initially-set working path or protection path that has recovered from the failure.

The present invention, which is a transmission apparatus being employed for a transmission network for searching a new protection path at the time point that a failure has occurred in a working path and the working path has been switched to a protection path, registering the searched protection path, and securing the working path and the protection path of which a ratio is one versus one at any time, is characterized in including: a holding unit for holding an initially-set working path and protection path; ȧ failure detecting unit for detecting the failure or recovery of the path; a failure recovery group in which the working path and the protection path are registered; a path switching unit for receiving a detection by the foregoing path failure detecting unit, deleting the protection path registered into the foregoing failure recovery group when the foregoing initially-set working path or protection path has recovered from the failure, and registering the foregoing initially-set working path or protection path that has recovered from the failure into the protection path; and a path pre-setting & switching unit for receiving a detection by the foregoing path failure detecting unit, switching the working path to the protection path registered into the foregoing failure recovery group when the failure has occurred in the working path.

The present invention, which is a transmission network system for searching a new protection path at the time point that a failure has occurred in a working path and the working path has been switched to a protection path, registering the searched protection path, and securing the working path and the protection path of which a ratio is one versus one at any time, is characterized in including: a holding unit for holding an initially-set working path and protection path; and a path switching unit for, when the foregoing initially-set working path or protection path has recovered from the failure, switching the path secured currently as the working path or the protection path to the foregoing initially-set working path or protection path that has recovered from the failure.

The present invention, which is a method of switching a path in a transmission network system for searching a new protection path at the time point that a failure has occurred in a working path and the working path has been switched to a protection path, registering the searched protection path, and securing the working path and the protection path of which a ratio is one versus one at any time, which is characterized in: pre-storing an initially-set working path and protection path; and when the foregoing initially-set working path or protection path has recovered from the failure, switching the path secured currently as the working path or the protection path to the foregoing initially-set working path or protection path that has recovered from the failure.

### BRIEF DESCRIPTION OF THE DRAWINGS

This and other objects, features and advantages of the present invention will become more apparent upon a reading of the following detailed description and drawings, in which:
Fig. 1 is a block diagram illustrating a configuration example of the transmission apparatus in accordance with an embodiment of the present invention;
Fig. 2 is a block diagram illustrating a configuration example of another transmission apparatus within a network of Fig. 1;
Fig. 3 is a view illustrating a network configuration example of the transmission apparatus for which high dependability of the network path in accordance with the embodiment of the present invention is applied;
Fig. 4 is a view illustrating an example of switching the path in the network configuration of the transmission apparatus for which high dependability of the network path in accordance with the embodiment of the present invention is applied;
Fig. 5 is a view illustrating an example of switching the path in the network configuration of the transmission apparatus for which high dependability of the network path in accordance with the embodiment of the present invention is applied;
Fig. 6 is a view illustrating an example of switching the path in the network configuration of the transmission apparatus for which high dependability of the network path in accordance with the embodiment of the present invention is applied;
Fig. 7 is a view illustrating an example of switching the path in the network configuration of the transmission apparatus for which high dependability of the network path in accordance with the embodiment of the present invention is applied;
Fig. 8 is a view illustrating an example of switching the path in the network configuration of the transmission apparatus for which high dependability of the network path in accordance with the embodiment of the present invention is applied; and
Fig. 9 is a view illustrating an example of switching the path in the network configuration of the transmission apparatus for which high dependability of the network path in accordance with the embodiment of the present invention is applied.

### EXEMPLARY EMBODIMENTS

The embodiments of the present invention will be explained by making a reference to the accompanied drawings.

At first, an outline of the transmission network in accordance with the present invention will be explained. In the transmission network in accordance with the present invention, the transmission apparatus that becomes an ingress for setting the path includes a path setting/deleting unit, a route calculating unit, a routing unit, a path pre-setting & switching unit, a path switching unit, a path failure detecting unit, and a working path/protection path holding unit.

Further, in the transmission network in accordance with the present invention, the transmission apparatus that becomes a relay or an egress for setting the path includes a path setting/deleting unit, a routing unit, and a path failure detecting unit.

In such a manner, in the transmission network in accordance with the present invention, the transmission apparatus that becomes an ingress for setting the path has the routing unit and the route calculating unit packaged therein, whereby the switching destination of the path can be used so long as the resources of the transmission network exist.

Further, in the transmission network in accordance with the present invention, the protection path is secured at the moment of previously setting the path, whereby the path can be switched at a high speed. In addition, in the transmission network in accordance with the present invention, the initially-set working path and protection path are held, whereby a changeover to the path initially set by a user can be made after the path recovers from the failure.

That is, the transmission network in accordance with the present invention is characterized in searching a new protection path at the time point that a failure has occurred in the working path and the working path has been switched to the protection path so as to secure the working path and the protection path of which a ratio is one versus one at any time, registering it as the protection path, holding the initially-set working path and protection path, and when the initially-set working path or protection path has recovered from the failure, switching the path secured currently as the working path or the protection path to the initially-set working path or protection path that has recovered from the failure.

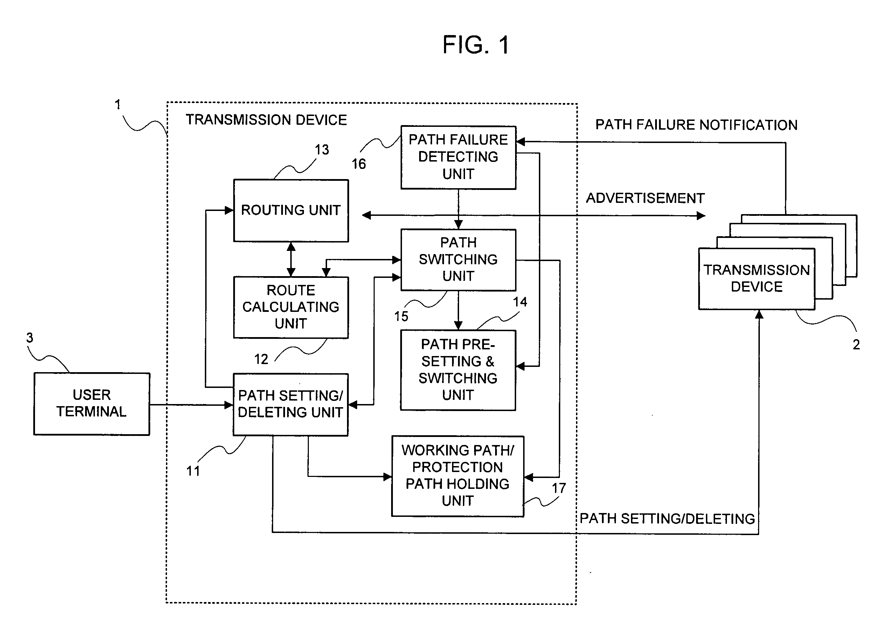

Fig. 1 is a block diagram illustrating a configuration example of the transmission apparatus in accordance with the embodiment of the present invention. Fig. 1 illustrates a configuration example of the transmission apparatus for providing a function of recovering the path from the failure at a high dependability to the network path relating to the present invention when the multi failure occurs therein.

A transmission apparatus 1, which is a apparatus that becomes an ingress for setting the path, is configured of a path setting/deleting unit 11, a route calculating unit 12, a routing unit 13, a path pre-setting & switching unit 14, a path switching unit 15, a path failure detecting unit 16, and a working path/protection path holding unit 17. A plurality of transmission apparatuses 2 are connected to the transmission apparatus 1.

The path setting/deleting unit 11 has a function of setting and deleting the path within the transmission apparatus. The path setting/deleting unit 11 registers the initially-set working path and protection path so that they are reserved in the working path/protection path holding unit 17. The path setting/deleting unit 11 newly sets the protection path of its own apparatus and deletes the working path according to a request by the path switching unit 15, and issues a command for setting the path and deleting the path to the external transmission apparatus 2. So as to advertise available resources of the transmission apparatus owing to the deletion of the path setting, the path setting/deleting unit 11 notifies an increase/a decrease in the above resources to the routing unit 13.

The route calculating unit 12 calculates a path route by using information of the resources within the network of the routing unit 13 when a new path route that goes through the transmission apparatus within the network is requested by the path switching unit 15.

The routing unit 13 advertises the available resources of its own transmission apparatus notified by the path setting/deleting unit 11 to other transmission apparatuses 2 within the network, and collects the available resources advertised by other transmission apparatuses 2 within the network, thereby to hold the available resources of the entirety of the network as information, and to give a reply of the above available resource information of the entirety of the network when a request is made by the route calculating unit 12.

The path pre-setting & switching unit 14 switches the working path and the protection path at a high speed with the technique of previously setting the path with regard to a failure recovery group that is configured of the working path and the protection path set by the path switching unit 15 when occurrence of the failure has been detected owing to information coming from the path failure detecting unit 16. The failure recovery group may exist in plural.

The path switching unit 15, when receiving a path failure notification and a path deletion notification from the path failure detecting unit 16, searches a route of the new protection path. The route of the protection path is set by searching a new protection route by the route calculating unit 12 and requesting the path setting/deleting unit 11 to set the path.

After setting the path by the path setting/deleting unit 11, the path switching unit 15 excludes the path in which the failure has occurred from the failure recovery group of the path pre-setting & switching unit 14, and adds the newly-set protection path to the failure recovery group. And, the path switching unit 15 requests the path setting/deleting unit 11 to delete the path in which the failure has occurred.

The path switching unit 15 makes a reference to the working path/protection path holding unit 17, and continues to monitor a notification saying recovery of the failure coming from the path failure detecting unit 16 without deleting the initially-set working path and protection path. The path switching unit 15, when receiving a notification saying recovery of the failure coming from the path failure detecting unit 16, excludes the path set currently as the protection path in the path pre-setting & switching unit 14 from the failure recovery group, and sets the path, which has recovered from the failure, to the failure recovery group in the case that the path, which has recovered from the failure, is the initially-set working path or protection path held in the working path/protection path holding unit 17. And, the path switching unit 15 requests the path setting/deleting unit 11 to delete the path excluded from the failure recovery group.

The path failure detecting unit 16 notifies the path failure that has occurred in its own transmission apparatus or the path failure received from the other transmission apparatuses 2 within the network to the path pre-setting & switching unit 14 and the path switching unit 15.

The working path/protection path holding unit 17 holds the initially-set working path and protection path so that they are not deleted due to the registration by the path setting/deleting unit 11. The working path/protection path holding unit 17 gives a reply of information of the held working path and protection path to a reference made by the path switching unit 15.

Each of the other transmission apparatuses 2 within the network is an apparatus other than the apparatus that becomes an ingress for setting the path, which exists in the network, and includes the transmission apparatus that becomes a relay and an egress of the path. A user terminal 3 gives an instruction for setting and deleting the path, and an instruction of the failure recovery group.

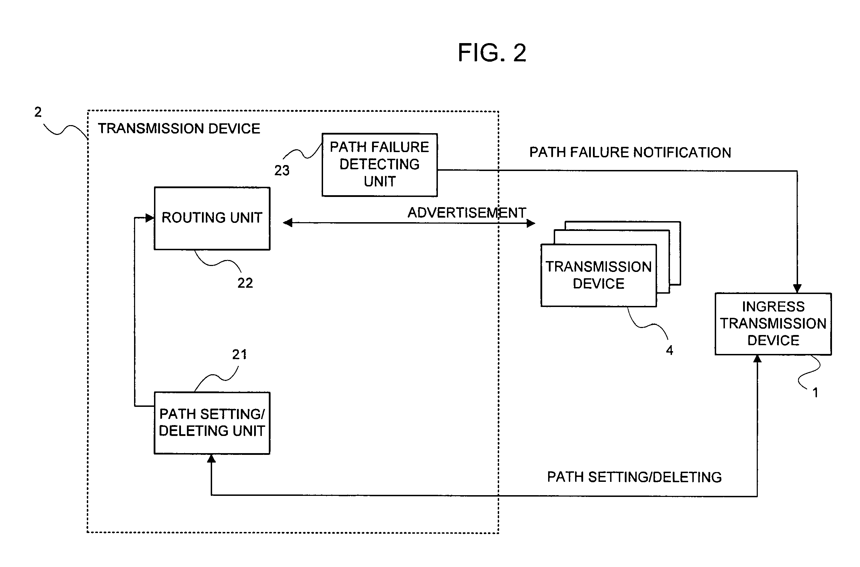

Fig. 2 is a block diagram illustrating a configuration example of another transmission apparatus 2 within the network of Fig. 1. In Fig. 2, the transmission apparatus 2, which is an apparatus that becomes a relay or an egress for setting the path, is configured of a path setting/deleting unit 21, a routing unit 22, and a path failure detecting unit 23. The ingress transmission apparatus 1 that becomes an ingress for setting the path, and a plurality of transmission apparatuses 4 other than it are connected to the transmission apparatus 2.

The path setting/deleting unit 21, which has a function of setting and deleting the path within the transmission apparatus, carries out the path setting and the path deletion for its own transmission apparatus according to a command for setting/deleting the path from the ingress transmission apparatus 1. The path setting/deleting unit 21, so as to make a report of available resources of the transmission apparatus owing to the deletion of the setting of the path, notifies an increase/a decrease in the above resources to the routing unit 22.

The routing unit 22 advertises the available resources of its own transmission apparatus notified from the path setting/deleting unit 21 to the other transmission apparatuses 4 within the network and the ingress transmission apparatus 1, and collects the available resources advertised by the other transmission apparatuses 4 within the network and the ingress transmission apparatus 1, thereby to hold the available resources of the entirety of the network as information.

The path failure detecting unit 23 notifies the path failure that has occurred in its own transmission apparatus to the ingress transmission apparatus 1.

The ingress transmission apparatus 1, which is an apparatus that becomes an ingress for setting and deleting the path within the transmission apparatus, is configured as shown in the above-mentioned Fig. 1. Each of the other transmission apparatuses 4 within the network is a transmission apparatus other than the apparatus that becomes an ingress for setting the path, which exists within the network, and includes the transmission apparatus that becomes a relay/an egress of the path.

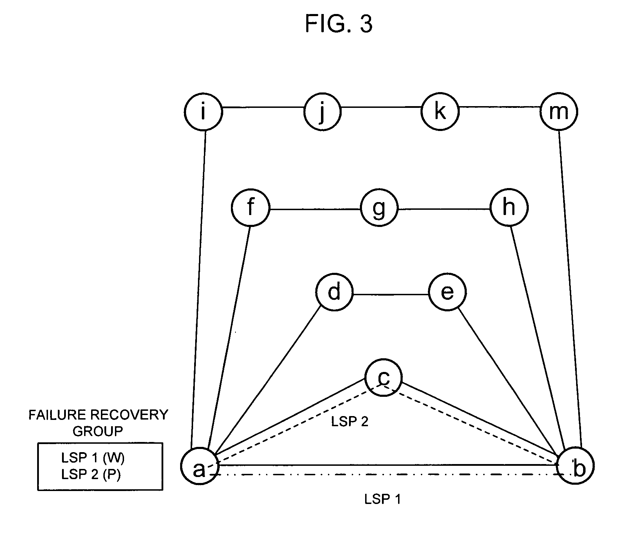

Fig. 3 is a view illustrating a network configuration example of the transmission apparatus for which high dependability of the network path in accordance with the embodiment of the present invention is applied. In Fig. 3, a transmission apparatus a is an apparatus that becomes an ingress for setting the path. A transmission apparatus b is an apparatus that becomes an egress of the path. Each of transmission apparatuses c, d, e, f, g, h, i, j, k, and m is an apparatus that becomes a relay of the path.

LSP (Label switched Path) 1 is a working path having the transmission apparatus a as an ingress. LSP 2 is a protection path having the transmission apparatus a as an ingress. The LSP 1 and the LSP 2 are registered into the failure recovery group. (W) signifies a working status, and (P) signifies a protection status.

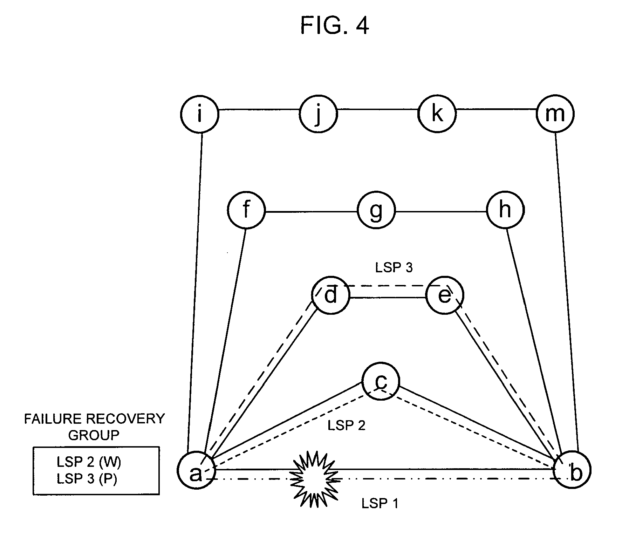

Each of Fig. 4 to Fig. 8 is a view illustrating an example of switching the path in the network configuration of the transmission apparatus for which high dependability of the network path in accordance with the embodiment of the present invention is applied. An operation of an example of switching the path in accordance with the embodiments of the present invention will be explained by making a reference to these Fig. 1 to Fig. 8.

With regard to the network configuration of Fig. 3, the transmission apparatus a has a configuration similar to that of the transmission apparatus 1 shown in Fig. 1, and each of the transmission apparatuses b, c, d, e, f, g, h, i, j, k, and m has a configuration similar to that of the transmission apparatus 2 shown in Fig. 2.

The user terminal 3 issues a request to the path setting/deleting unit 11 of the transmission apparatus a in order to set the working path LSP 1 between the transmission apparatus a and the transmission apparatus b. The path setting/deleting unit 11 sets the working path according to a request for the setting, and issues a command for setting the path to the external transmission apparatus b. And, the path setting/deleting unit 11, so as to advertise available resources of the transmission apparatus due to the setting of the path, notifies a decrease in the above resources to the routing unit 13.

The path setting/deleting unit 21 of the transmission apparatus b having received a command for setting the path from the transmission apparatus a sets the working path according to a request for the setting, and so as to advertise available resources of the transmission apparatus due to the setting of the path, notifies a decrease in the above resources to the routing unit 22.

The user terminal 3 issues a request to the path setting/deleting unit 11 of the transmission apparatus a in order to set the protection path LSP 2 between the transmission apparatus a and the transmission apparatus c and between the transmission apparatus c and the transmission apparatus b. The path setting/deleting unit 11 sets the protection path according to a request for the setting, and issues a command for setting the path to the external transmission apparatus c.

And, the path setting/deleting unit 11, so as to advertise available resources of the transmission apparatus due to the setting of the path, notifies a decrease in the above resources to the routing unit 13. Simultaneously therewith, the path setting/deleting unit 11 registers the initially-set working path and protection path so that they are held in the working path/protection path holding unit 17. In this example, the initially-set working path is the LSP 1, and the initially-set protection path is the LSP 2.

The path setting/deleting unit 21 of the transmission apparatus c having received a command for setting the path from the transmission apparatus a sets the working path according to a request for the setting, and so as to advertise available resources of the transmission apparatus due to the setting of the path, notifies a decrease in the above resources to the routing unit 22. In addition, the transmission apparatus c issues a command for setting the path to the transmission apparatus b.

The path setting/deleting unit 21 of the transmission apparatus b having received a command for setting the path from the transmission apparatus a sets the protection path according to a request for the setting, and so as to advertise available resources of the transmission apparatus due to the setting of the path, notifies a decrease in the above resources to the routing unit 22.

After the setting of the paths of the LSP 1 and the LSP 2 is completed, the path setting/deleting unit 11 registers the LSP 1 and the LSP 2 into the failure recovery group of the path pre-setting & switching unit 14 via the path switching unit 15.

Fig. 4 is a view signifying the situation in which the failure has occurred in the working path LSP 1. The path failure detecting unit 16 of the transmission apparatus a notifies the effect that the failure has occurred to the path pre-setting & switching unit 14 and the path switching unit 15, respectively. The path pre-setting & switching unit 14 switches the working path LSP 1 to the protection path LSP 2 registered into the failure recovery group at a high speed.

The path switching unit 15 requests the route calculating unit 12 to search a new route. With the case of Fig. 4, a route a-d-e-b exists. The path switching unit 15 requests the path setting/deleting unit 11 to set the path of a protection path LSP 3, and the path setting/deleting unit 11 sets the path of the protection path LSP 3.

The routing units 13 and 22 of each of the transmission apparatuses a, d, e, and b advertise a decrease in the available resources of the transmission apparatus due to the setting of the path, accompanied by the setting of the path. The path switching unit 15 of the transmission apparatus a deletes the LSP 1 from the failure recovery group of the path pre-setting & switching unit 14, and registers the LSP 3 as the protection path instead thereof.

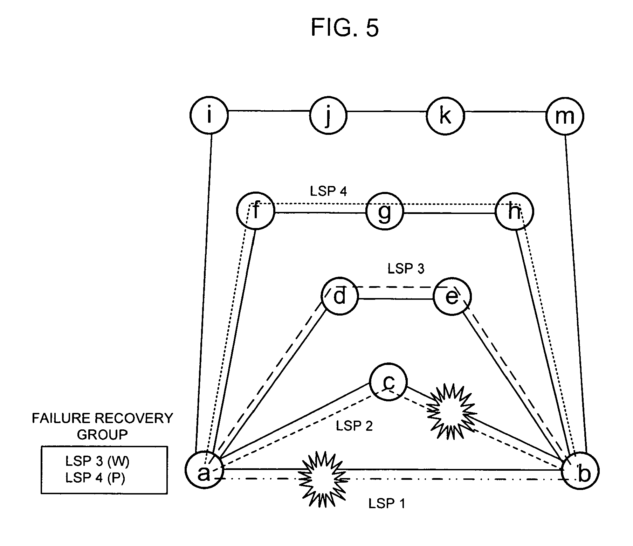

Fig. 5 is a view signifying the situation in which the failure has occurred in the working path LSP 2. The path failure detecting unit 16 of the transmission apparatus a notifies the effect that the failure has occurred to the path pre-setting & switching unit 14 and the path switching unit 15, respectively. The path pre-setting & switching unit 14 switches the working path LSP 2 to the protection path LSP 3 registered into the failure recovery group at a high speed.

The path switching unit 15 requests the route calculating unit 12 to search a new route. With the case of Fig. 5, a route a-f-g-h-b exists. The path switching unit 15 requests the path setting/deleting unit 11 to set the path of a protection path LSP 4, and the path setting/deleting unit 11 sets the path of the protection path LSP 4.

The routing units 13 and 22 of each of the transmission apparatuses a, f, g, h, and b advertise a decrease in the available resources of the transmission apparatus due to the setting of the path, accompanied by the setting of the path. The path switching unit 15 of the transmission apparatus a deletes the LSP 2 from the failure recovery group of the path pre-setting & switching unit 14, and registers the LSP 4 as the protection path instead thereof.

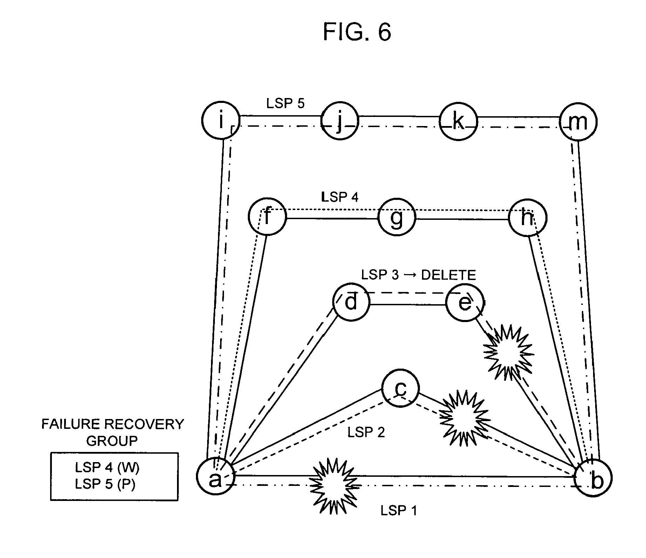

Fig. 6 is a view signifying the situation in which the failure has occurred in the working path LSP 3. The path failure detecting unit 16 of the transmission apparatus a notifies the effect that the failure has occurred to the path pre-setting & switching unit 14 and the path switching unit 15, respectively. The path pre-setting & switching unit 14 switches the working path LSP 3 to the protection path LSP 4 registered into the failure recovery group at a high speed.

The path switching unit 15 requests the route calculating unit 12 to search a new route. With the case of Fig. 6, a route a-i-j-k-m-b exists. The path switching unit 15 requests the path setting/deleting unit 11 to set the path of a protection path LSP 5, and the path setting/deleting unit 11 sets the path of the protection path LSP 5.

The routing units 13 and 22 of each of the transmission apparatuses a, i, j, k, m, and b advertise a decrease in the available resources of the transmission apparatus due to the setting of the path, accompanied by the setting of the path. Next, the path switching unit 15 request the path setting/deleting unit 11 to delete the LSP 3.

The routing units 13 and 22 of each of the transmission apparatuses a, d, e, and b advertise an increase in the available resources of the transmission apparatus owing to the deletion of the path, accompanied by the deletion of the path. The path switching unit 15 of the transmission apparatus a deletes the LSP 3 from the failure recovery group, and registers the LSP 5 as the protection path instead thereof.

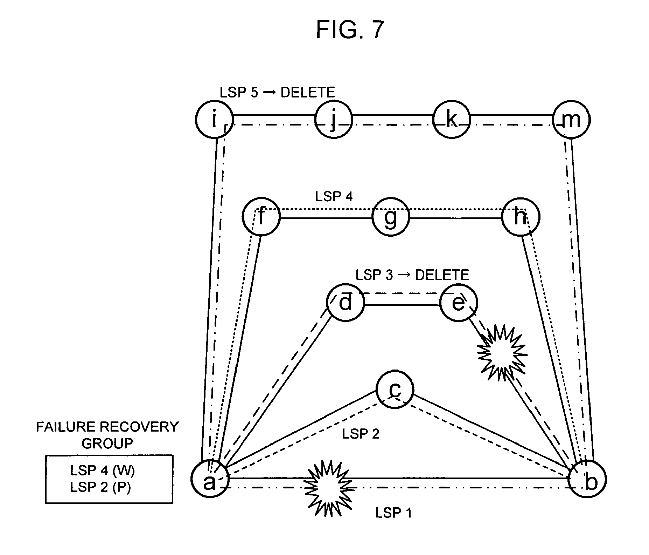

Fig. 7 is a view signifying the situation in which the initially-set protection path LSP 2 has recovered from the failure. The path failure detecting unit 16 of the transmission apparatus a notifies the effect that the path has recovered from the failure to the path pre-setting & switching unit 14 and the path switching unit 15, respectively. The path pre-setting & switching unit 14 does not execute a changeover because the LSP 2 has not been registered into the failure recovery group.

The path switching unit 15 receives the effect that the path has recovered from the failure, and investigates whether the path, which has recovered, is the path registered into the working path/protection path holding unit 17. Herein, the path, which has recovered, is the LSP 2, and the LSP 2 is the path initially registered into the working path/protection path holding unit 17 as the protection path. Thereupon, the path switching unit 15 requests the path setting/deleting unit 11 to delete the LSP 5 registered into the failure recovery group of the path pre-setting & switching unit 14. The routing units 13 and 22 of each of the transmission apparatuses a, i, j, k, m, and b advertise an increase in the available resources of the transmission apparatus owing to the deletion of the path, accompanied by the deletion of the path. And, the path switching unit 15 of the transmission apparatus a deletes the LSP 5 from the failure recovery group of the path pre-setting & switching unit 14, and registers the LSP 2 as the protection path instead thereof.

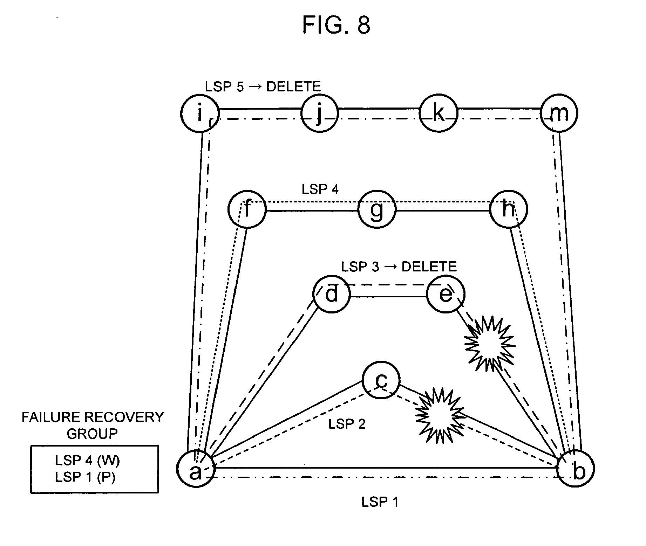

Fig. 8 is a view signifying the situation in which the initially-set working path LSP 1 has recovered from the failure, being the status of Fig.6. The path failure detecting unit 16 of the transmission apparatus a notifies the effect that the path has recovered from the failure to the path pre-setting & switching unit 14 and the path switching unit 15, respectively. The path pre-setting & switching unit 14 does not execute a changeover because the LSP 1 has not been registered into the failure recovery group.

The path switching unit 15 receives the effect that the path has recovered from the failure, and investigates whether the path, which has recovered, is the path registered into the working path/protection path holding unit 17. Herein, the path, which has recovered, is the LSP 1, and the LSP 1 is the path initially registered into the working path/protection path holding unit 17 as the working path. Thereupon, the path switching unit 15 requests the path setting/deleting unit 11 to delete the LSP 4. The routing units 13 and 22 of each of the transmission apparatuses a, f, g, h, and b advertise an increase in the available resources of the transmission apparatus owing to the deletion of the path, accompanied by the deletion of the path. The path switching unit 15 of the transmission apparatus a deletes the LSP 4 from the failure recovery group, and registers the LSP 1 as the protection path instead thereof.

In such a manner, when any of the initially-set the working path and protection path has recovered from the failure, the path already registered as the protection path is deleted, and the initially-set the working path or protection path, which has recovered from the failure, is registered as the protection path.

Additionally, at this time, the path, which is being employed as the working path, may be switched to the initially-set the working path or protection path, which has recovered from the failure. In this case, the automatic changeover being made by the path switching unit 15 may be employed, and the manual changeover being made by the user may be employed.

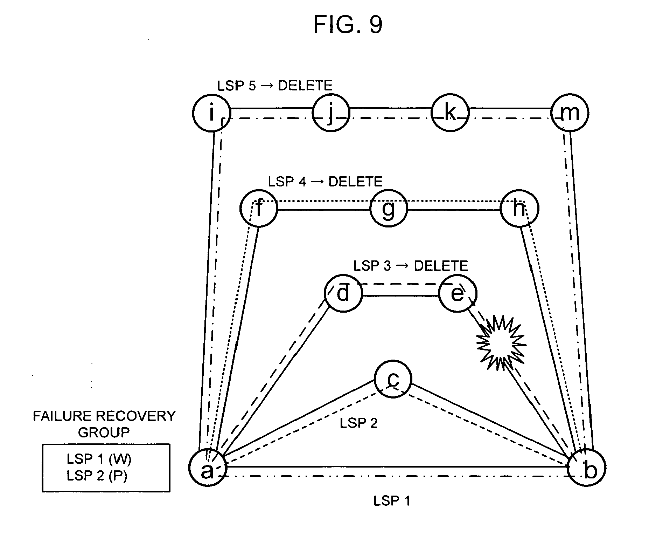

Next, the case that the path LSP 1 has recovered from the failure, being the status of Fig. 7, will be explained. Fig. 9 is a view signifying the situation in which the path LSP 1 has recovered from the failure, being the status of Fig. 7.

The path failure detecting unit 16 of the transmission apparatus a notifies the effect that the path LSP 1 has recovered from the failure to the path pre-setting & switching unit 14 and the path switching unit 15, respectively.

The path switching unit 15 receives the effect that the path has recovered from the failure, and investigates whether the path, which has recovered, is the path registered into the working path/protection path holding unit 17. Herein, the path, which has recovered, is the LSP 1, and the LSP 1 is the path initially registered into the working path/protection path holding unit 17 as the working path. Further, the initially-set protection path LSP 2 has been already registered into the failure recovery group of the path pre-setting & switching unit 14.

Thereupon, the path switching unit 15 of the transmission apparatus a requests the path setting/deleting unit 11 to delete the LSP 4. The routing units 13 and 22 of each of the transmission apparatuses a, f, g, h, and b advertise an increase in the available resources of the transmission apparatus owing to the deletion of the path, accompanied by the deletion of the path. And, the path switching unit 15 deletes the LSP 4 from the failure recovery group, and registers the LSP 1 as the working path instead thereof.

The path pre-setting & switching unit 14 switches the working path from the LSP 4 to the LSP 1 at a high speed due to a change of the working path of the failure recovery group from the LSP 4 to the LSP 1.

Additionally, while in the foregoing example, the working path is directly switched from the LSP 4 to the LSP 1, the working path may be switched from the LSP 4 to the LSP 2 registered into the failure recovery group as the protection path to register the LSP 1 into the failure recovery group as the protection path.

In this embodiment, the transmission apparatus 1, which becomes an ingress for setting the path, has the routing unit 13 and the route calculating unit 12 packaged therein in such a manner, whereby the switching destination of the path can be used so long as the resources of the network exist.

Further, in this embodiment, the protection path is secured at the moment of previously setting the path, whereby the path can be switched at a high speed. Simultaneously therewith, in this embodiment, the initially-set working path and protection path are held, whereby a changeover to the path initially set by the user can be made after the path recovers from the failure.

Further, the present invention makes it possible to switch the path secured currently as the working path or the protection path to the initially-set working path or protection path that has recovered from the failure when the initially-set working path or protection path has recovered from the failure.

A first example of the present invention is a transmission apparatus being employed for a transmission network for searching a new protection path at the time point that a failure has occurred in a working path and the working path has been switched to a protection path, registering the searched protection path, and securing the working path and the protection path of which a ratio is one versus one at any time, which is characterized in including a holding means for holding an initially-set working path and protection path, and a means for, based upon a content of the holding of the foregoing holding means, making a changeover to the above working path after the foregoing initially-set working path recovers from the failure.

A second example of the present invention is **characterized in that**, in the above-mentioned example, the foregoing means for making a changeover to the working path makes a changeover to the foregoing working path and the foregoing protection path held in the foregoing holding means.

A third example of the present invention is **characterized in that**, in the above-mentioned examples, the foregoing means for making a changeover to the working path automatically or manually makes a changeover to the foregoing working path.

A fourth example of the present invention is a transmission network for searching a new protection path at the time point that, in a transmission apparatus, a failure has occurred in a working path and the working path has been switched to a protection path, registering the searched protection path, and securing the working path and the protection path of which a ratio is one versus one at any time, which is **characterized in that** that the foregoing transmission apparatus includes a holding means for holding an initially-set working path and protection path, and a means for, based upon a content of the holding of the foregoing holding means, making a changeover to the above working path after the foregoing initially-set working path recovers from the failure.

A fifth example of the present invention is **characterized in that**, in the above-mentioned example, the foregoing means for making a changeover to the working path makes a changeover to the foregoing working path and the foregoing protection path held in the foregoing holding means.

A sixth example of the present invention is **characterized in that**, in the above-mentioned examples, the foregoing means for making changeover to the working path automatically or manually makes a changeover to the foregoing working path.

A seventh example of the present invention is **characterized in that**, in the above-mentioned examples, the transmission apparatus, which becomes an ingress for setting the path, includes a path setting/deleting means, a route calculating means, a routing means, a path pre-setting & switching means, a path switching means, a path failure detecting means, the foregoing holding means, and the foregoing means for making a changeover to the working path, and the transmission apparatus, which becomes a relay or an egress for setting the foregoing path, includes a path setting/deleting means, a routing means, and a path failure detecting means.

An eighth example of the present invention is a method of switching a path being employed for a transmission network for searching a new protection path at the time point that, in a transmission apparatus, a failure has occurred in a working path and the working path has been switched to a protection path, registering the searched protection path, and securing the working path and the protection path of which a ratio is one versus one at any time, which is **characterized in that** foregoing transmission apparatus executes a process of holding an initially-set working path and protection path, and a process of, based upon a content of the holding of the foregoing holding means, making a changeover to the above working path after the foregoing initially-set working path recovers from the failure.

A ninth example of the present invention is **characterized in that**, in the above-mentioned example, the foregoing process of making a changeover to the working path is for making a changeover to the foregoing working path and the foregoing protection path held in the foregoing holding means.

A tenth example of the present invention is **characterized in that**, in the above-mentioned examples, the foregoing process of making a changeover to the working path is for automatically or manually making a changeover to the foregoing working path.

An eleventh example of the present invention is **characterized in that**, in the above-mentioned examples, the transmission apparatus, which becomes an ingress for setting the path, includes a path setting/deleting means, a route calculating means, a routing means, a path pre-setting & switching means, a path switching means, a path failure detecting means, the foregoing holding means, and the foregoing means for making a changeover to the working path, and the transmission apparatus, which becomes a relay or an egress for setting the foregoing path, includes a path setting/deleting means, a routing means, and a path failure detecting means.

Above, while the present invention has been described with respect to the embodiments and the examples, the present invention is not always limited to the above-mentioned embodiment and examples, and alterations to, variations of, and equivalent to these embodiments and the examples can be implemented without departing from the spirit and scope of the present invention.

## Claims

1. A transmission apparatus being employed for a transmission network for searching a new protection path at the time point that a failure has occurred in a working path and the working path has been switched to a protection path, registering the searched protection path, and securing the working path and the protection path of which a ratio is one versus one at any time, comprising:
a holding unit for holding an initially-set working path and protection path; and
a path switching unit for, when said initially-set working path or protection path has recovered from the failure, switching the path secured currently as the working path or the protection path to said initially-set working path or protection path that has recovered from the failure.

2. A transmission apparatus according to claim 1, wherein when said initially-set working path or protection path has recovered from the failure, said path switching unit switches the path secured currently as the protection path to said initially-set working path or protection path that has recovered from the failure.

3. A transmission apparatus according to claim 1 or claim 2, wherein when said initially-set working path or protection path has recovered from the failure, said path switching unit switches the path secured currently as the working path to said initially-set working path or protection path that has recovered from the failure.

4. A transmission apparatus according to any one of claim 1 to claim 3, wherein said path switching unit makes a changeover automatically or manually.

5. A transmission apparatus according to any one of claim 1 to claim 4, wherein said holding unit and said path switching unit are installed into the transmission apparatus, which becomes an ingress for setting the path.

6. A transmission apparatus being employed for a transmission network for searching a new protection path at the time point that a failure has occurred in a working path and the working path has been switched to a protection path, registering the searched protection path, and securing the working path and the protection path of which a ratio is one versus one at any time, comprising:
a holding unit for holding an initially-set working path and protection path;
a failure detecting unit for detecting the failure or recovery of the path;
a failure recovery group in which the working path and the protection path are registered;
a path switching unit for receiving a detection by said path failure detecting unit, deleting the protection path registered into said failure recovery group when said initially-set working path or protection path has recovered from the failure, and registering said initially-set working path or protection path that has recovered from the failure into the failure recovery group as the protection path; and
a path pre-setting & switching unit for receiving a detection by said path failure detecting unit, switching the working path to the protection path registered into said failure recovery group when the failure has occurred in the working path.

7. A transmission apparatus according to claim 6, wherein said holding unit, said path failure detecting unit, said failure recovery group, said path switching unit, and said path pre-setting & switching unit are installed into the transmission apparatus, which becomes an ingress for setting the path.

8. A transmission network system for searching a new protection path at the time point that a failure has occurred in a working path and the working path has been switched to a protection path, registering the searched protection path, and securing the working path and the protection path of which a ratio is one versus one at any time, comprising:
a holding unit for holding an initially-set working path and protection path; and
a path switching unit for, when said initially-set working path or protection path has recovered from the failure, switching the path secured currently as the working path or the protection path to said initially-set working path or protection path that has recovered from the failure.

9. A transmission network system according to claim 8, wherein when said initially-set working path or protection path has recovered from the failure, said path switching unit switches the path secured currently as the protection path to said initially-set working path or protection path that has recovered from the failure.

10. A transmission network system according to claim 8 or claim 9, wherein when said initially-set working path or protection path has recovered from the failure, said path switching unit switches the path secured currently as the working path to said initially-set working path or protection path that has recovered from the failure.

11. A transmission network system according to any one of claim 8 to claim 10, wherein said path switching unit makes a changeover automatically or manually.

12. A transmission network system according to any one of claim 8 to claim 11, wherein said holding unit and said path switching unit are installed into the transmission apparatus, which becomes an ingress for setting the path.

13. A method of switching a path in a transmission network system for searching a new protection path at the time point that a failure has occurred in a working path and the working path has been switched to a protection path, registering the searched protection path, and securing the working path and the protection path of which a ratio is one versus one at any time, comprising:
pre-storing an initially-set working path and protection path; and
when said initially-set working path or protection path has recovered from the failure, switching the path secured currently as the working path or the protection path to said initially-set working path or protection path that has recovered from the failure.

14. A method of switching the path according to claim 13, comprising switching the path secured currently as the protection path to said initially-set working path or protection path that has recovered from the failure when said initially-set working path or protection path has recovered from the failure.

15. A method of switching the path according to claim 13 or claim 14, comprising switching the path secured currently as the working path to said initially-set working path or protection path that has recovered from the failure when said initially-set working path or protection path has recovered from the failure.
